(19) **Europäisches Patentamt European Patent Office Office européen des brevets**

(11) **EP 1 927 390 B1**

(12) **FASCICULE DE BREVET EUROPEEN**

| | |
|---|---|
| (45) Date de publication et mention de la délivrance du brevet:<br>**09.02.2011 Bulletin 2011/06** | (51) Int Cl.:<br>***B01D 46/46*** ***(2006.01)*** |

(21) Numéro de dépôt: **07356158.1**

(22) Date de dépôt: **09.11.2007**

(54) **Procédé de gestion du décolmatage d'un filtre à manches**

Verfahren zur Steuerung der Reinigung eines Schlauchfilters

Method of managing the cleaning of a bag filter

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.11.2006 FR 0609847**

(43) Date de publication de la demande:
**04.06.2008 Bulletin 2008/23**

(73) Titulaire: **LAB SA**
**69006 Lyon (FR)**

(72) Inventeurs:
• **Siret, Bernard**
**69200 Venissieux (FR)**

• **Tabaries, Frank**
**83190 Ollioules (FR)**
• **Woillez, Jacques**
**69006 Lyon (FR)**

(74) Mandataire: **Schouller, Jean-Philippe et al**
**Cabinet Lavoix**
**62, rue de Bonnel**
**69448 Lyon Cedex 03 (FR)**

(56) Documents cités:
**EP-A- 0 015 409      EP-A- 0 788 826**
**DE-A- 3 718 846      DE-A- 19 607 740**
**DE-A- 19 951 962      US-A- 5 484 536**

## Description

La présente invention concerne un procédé de gestion du décolmatage d'un filtre à manches.

Dans le domaine de l'épuration des gaz et des fumées, par exemple des fumées industrielles ou des gaz de combustion, la filtration joue un rôle primordial. Non seulement la filtration peut enlever les particules solides d'un flux gazeux avant son rejet à l'atmosphère, mais elle peut aussi contribuer à épurer indirectement les gaz des polluants gazeux, en particulier le HCl et le $SO_2$. On injecte pour cela dans la veine gazeuse en amont du filtre un réactif solide pulvérulent, qui va se combiner au polluant à éliminer, ce réactif et les produits de réaction étant finalement retenus par le filtre, formant ainsi une couche pulvérulente sur le matériau, ou média filtrant.

Pour réaliser cette opération de filtration, plusieurs technologies sont utilisables. On trouve les filtres en matériaux poreux (céramique, métal fritté), en cartouches plissées, à gravier et les filtres à manches en tissus ou en fibres, pour ne mentionner que quelques possibilités. La présente invention concerne plus particulièrement les seuls filtres dits à manches.

Dans un tel système, les particules solides collectées, c'est à dire les poussières contenues dans les gaz et les produits de réaction du réactif pulvérulent avec les gaz, s'accumulent à la surface des manches et forment ce qui est appelé un gâteau de filtration, dont l'épaisseur atteint plusieurs millimètres. Au fur et à mesure que les solides sont collectés, l'épaisseur de ce gâteau augmente, ce qui a pour effet d'augmenter la perte de charge à travers le filtre. Cette perte de charge croît sensiblement linéairement avec le temps et il arrive un moment où celle-ci devient trop importante pour être tolérée par le reste du système, par exemple par les ventilateurs de la ligne de traitement des fumées.

Par ailleurs, une perte de charge trop faible est le signe que le gâteau de filtration est trop mince et que, par conséquent, les caractéristiques de filtration et d'épuration peuvent être insuffisantes. Pour cette raison, quand la perte de charge du filtre dépasse un certain seuil on initie une séquence de nettoyage, dite de décolmatage, qui peut consister à faire passer de l'air à contresens, ou bien à secouer toute une rangée de manches de filtration, ou bien encore à envoyer une impulsion d'air comprimé sur une ou plusieurs rangées de manches. Usuellement, quand la perte de charge est redescendue à un autre seuil préalablement défini, on arrête le processus de décolmatage.

Cette solution, si elle marche bien dans beaucoup de cas, fonctionne mal lorsque le débit des fumées connaît des fluctuations importantes, du fait du procédé ou des équipements situés en amont du filtre à manches. Par exemple, si une pointe de débit se manifeste, la perte de charge va aussitôt augmenter, la perte de charge étant sensiblement proportionnelle, aux débits élevés, à un exposant usuellement compris entre 1 et 2.

Cet accroissement soudain de la perte de charge va provoquer le déclenchement du décolmatage du filtre. Or, ce n'est pas pour autant que l'épaisseur de gâteau de filtration aura varié et, dès que le pic de débit sera passé, on retrouvera une faible perte de charge. Dans ces conditions, on aura initié une séquence de décolmatage pour rien.

De plus, ce décolmatage intempestif peut même avoir des effets néfastes en termes de performances pour le contrôle des gaz acides. En effet, ce décolmatage va soustraire aux manches une grande quantité de réactifs utiles à la captation des polluants au moment même ou le flux de polluants à épurer est en augmentation. Par conséquent, on assistera à une baisse de l'efficacité de captation du polluant d'une part, et à une augmentation de la consommation du réactif pulvérulent d'autre part, puisqu'il faut remplacer la couche de réactif qui était en place par une autre.

Il existe une autre situation pour laquelle le processus de décolmatage habituellement utilisé est peu satisfaisant. Il s'agit du cas, qui se produit de manière aléatoire sur la ligne de traitement des fumées, où une séquence de décolmatage est déclenchée alors même que la concentration en polluants à capter est à son niveau maximal. Dans ce cas, on soustrait de grandes quantités de réactifs au moment où on en a le plus besoin, c'est-à-dire pendant le pic de concentration de polluants. Il en résulte que le gaz n'est pas suffisamment épuré et que la concentration des polluants à la sortie du filtre à manches peut voir sa valeur excéder les limites admises.

US-A-5 484 536 concerne un procédé de gestion du décolmatage d'un filtre à manche, dans lequel on mesure la perte de charge au travers du filtre, puis on calcule une valeur de perte de charge corrigée en fonction de la température et du débit du fluide. Le décolmatage est initié lorsque cette valeur corrigée de perte de charge est supérieure à une valeur prédéterminée.

L'invention vise à remédier aux différents inconvénients évoqués ci-dessus. A cet effet, elle a pour objet un procédé selon la revendication 1 annexée.

D'autres caractéristiques avantageuses de l'invention font l'objet des revendications 2 à 5 annexées.

L'invention va être décrite ci-après, en référence à la figure unique, qui est un logigramme décrivant les différentes étapes d'un procédé de gestion conforme à l'invention.

La présente invention concerne un mode de gestion de séquences de décolmatage d'un filtre à manches. Ce dernier, qui n'est pas représenté, est d'un type connu en soi et ne sera pas décrit plus en détail dans ce qui suit. On souhaite, avant tout, éviter deux cas de figure :

- le cas où un décolmatage serait initié suite à un pic de débit de courte durée,
- le cas où un décolmatage serait initié alors qu'un pic de concentration en polluants est en train de se présenter au filtre. En effet, dans cette situation, on a besoin de toute l'épaisseur du gâteau de filtration et il serait malvenu d'initier une séquence de décolmatage, à moins que ce ne soit absolument nécessaire pour d'autres raisons.

En général, lorsqu'un pic de concentration polluant est détecté, les solutions de l'art antérieur enseignent d'augmenter la quantité de réactifs injectée. Ceci implique donc une augmentation correspondante de la perte de charge et, par conséquent, tend à rapprocher d'une étape de décolmatage. Au contraire, dans le cas d'un pic de concentration en polluants, l'invention surseoit au décolmatage.

On utilise, selon l'invention, trois types de signaux pour gérer le décolmatage :

- le débit de gaz (ou bien un signal directement lié au débit),
- la perte de charge à travers le filtre, et
- au moins un signal fournissant une indication de la concentration en polluants, ces polluants arrivant et/ou quittant le filtre et étant mesurés par un dispositif de mesure approprié.

Pour ce qui est du débit, on peut, par exemple, utiliser un signal transmis par un débitmètre situé en amont ou bien en aval du filtre, ou un signal indiquant la vitesse de rotation d'un ventilateur.

Le signal de perte de charge du filtre est fourni par des capteurs de pression, ou de pression différentielle, situés en amont et en aval du filtre, par exemple.

Le signal de charge en polluants est donné, par exemple, par des analyseurs amont, aval, ou amont et aval mesurant des concentrations de polluants comme HCl ou $SO_2$.

Les différents modes d'acquisition décrits ci-dessus, concernant le débit, la perte de charge et la concentration en polluants, sont de type connu en soi.

Trois seuils de la valeur de la perte de charge, notée DP, à travers le filtre sont alors définis:

- un seuil bas, DP1

Il s'agit d'un seuil en deçà duquel les performances en dépollution ou en filtration du filtre ne sont plus assurées correctement. De façon avantageuse, DP1 est choisi dans la plage comprise entre 700 et 1500 Pa.

- un seuil haut, DP2

Il s'agit d'un seuil pour lequel l'énergie requise par le ventilateur de tirage dépasse les valeurs admises, ou bien qui peut dépasser les capacités du système de décolmatage. De façon avantageuse, DP2 est choisi dans la plage comprise entre 1000 et 2000 Pa.

- et un seuil très haut, DP3

Il s'agit d'un seuil qui induit dans la ligne de traitement des fumées une dépression ou une surpression telle qu'elle dépasse les limites admises vis à vis de la résistance mécanique de l'installation. De façon avantageuse, DP3 est compris entre 1500 et 2500 Pa.

Une valeur filtrée du signal de mesure de la perte de charge est par ailleurs acquise. Ceci permet de s'affranchir des bruits de mesure, liés notamment aux pics de débit ponctuels ou encore aux signaux parasites. L'acquisition de cette valeur filtrée, notée DP*, peut être réalisée par des moyens numériques ou analogiques.

Ainsi, on peut par exemple utiliser un traitement du signal par filtre numérique passe bas, d'un algorithme connu en soi, ou bien utiliser un signal filtré de perte de charge fourni par un boîtier hardware, qui prend comme entrée le signal brut de perte de charge et fournit un signal filtré. Les algorithmes numériques de Savisky-Golay, le filtre numérique de Holt, les filtres exponentiels peuvent, à titre d'exemple, être utilisés.

Ainsi, dans le cas où on utilise l'algorithme de Savisky-Golay, DP* peut par exemple être obtenu comme suit : DP* = 0.126*DP(t-10 $\Delta$t) + 0.0140*DP(t-9 $\Delta$t) - 0.0629*DP(t-8 $\Delta$t) - 0.105*DP(t-7 $\Delta$t) - 0.112*DP(t-6 $\Delta$t) - 0.0839*DP(t-5 $\Delta$t) - 0.0210*DP(t-4 $\Delta$t) + 0.0769*DP(t-3 $\Delta$t) + 0.210*DP(t-2 $\Delta$t) + 0.378*DP(t- $\Delta$t) + 0.5800*DP(t) où $\Delta$t est l'intervalle de temps séparant deux acquisitions du signal de perte de charge, $\Delta$t étant compris entre 10 et 60 secondes.

Selon l'invention, cette valeur filtrée DP* est alors corrigée par une valeur liée au débit, soit $DP_c$ cette nouvelle valeur corrigée de la perte de charge. On utilise, pour ce faire, le signal de débit, ramené à un signal de référence suivant la relation

$$DP_c = DP^{\bullet} \times \left( \frac{Q_{ref}}{\overline{Q}} \right)^n$$

où DP* est la valeur filtrée de la perte de charge, $Q$ la valeur moyenne du débit sur une période de référence, par exemple une demi-heure, $Q_{ref}$ un débit de référence, par exemple égal au débit nominal de l'installation, et où n est un exposant compris entre 1 et 2.

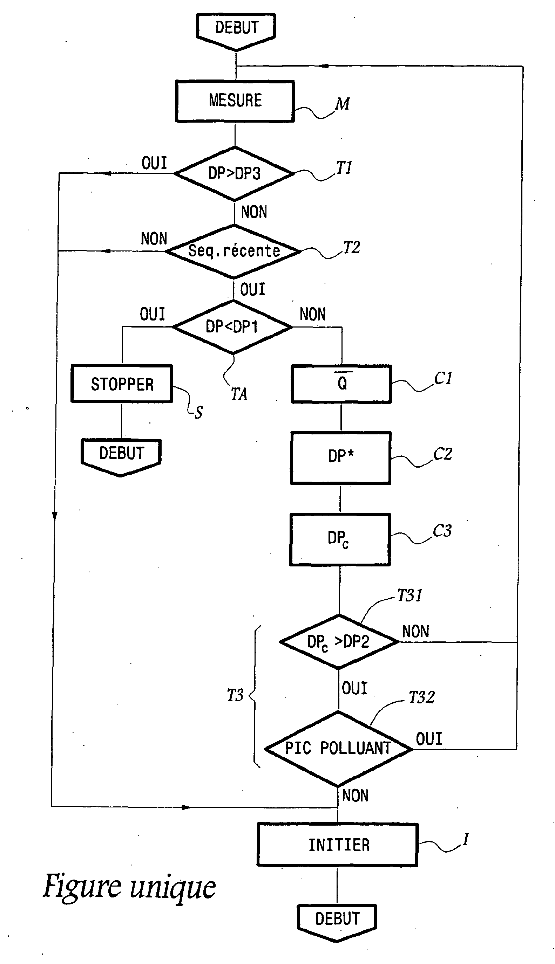

La gestion du décolmatage, réalisée conformément à l'invention, est décrite en référence à la figure 1.

On met tout d'abord en oeuvre, au bloc M, la mesure des paramètres évoqués ci-dessus, à savoir la perte de charge, le débit, ainsi que les concentrations en polluants. Puis, on réalise, dans le bloc T1, un premier test de comparaison entre la perte de charge DP, non filtrée, et le seuil très haut DP3, soit :

Test 1 : DP > DP3

Si la perte de charge absolue du filtre dépasse le seuil très haut DP3, le décolmatage est déclenché quoi qu'il arrive, à savoir qu'on se dirige vers le bloc I correspondant à l'initiation du décolmatage.

Si la condition du test 1 n'est pas remplie, on procède alors à un second test, représenté par le bloc T2, qui consiste à vérifier si une séquence de décolmatage a récemment été mise en oeuvre. Si aucune séquence de décolmatage n'a été initiée depuis plus d'un temps $\tau$, typiquement compris entre 15 et 90 minutes, le décolmatage est mis en oeuvre.

Il s'agit d'un test de précaution qui vise à ne pas permettre au gâteau de filtration de séjourner trop longtemps sur les manches, ce qui compromettrait l'efficacité des décolmatages ultérieurs.

Si la réponse au test 2 est OUI, à savoir qu'un décolmatage a récemment eu lieu, on réalise alors le test d'arrêt au bloc TA. Ce test vise à comparer la perte de charge non corrigée DP et le seuil bas DP1. Si DP est inférieur à DP1, on stoppe le décolmatage comme représenté au bloc S.

Si la réponse au test d'arrêt TA est NON, on réalise alors trois calculs, dans les blocs C1, C2 et C3. Ainsi, on calcule successivement la valeur de Q, de DP* et de $DP_c$, définies dans ce qui précède.

Puis, on réalise un troisième test, dans les deux blocs T31 et T32, formant l'ensemble de blocs T3. Ce troisième test peut être défini comme suit :

Test 3 : $DP_c$ > DP2 et un pic de polluants n'est pas détecté.

De façon plus précise, au bloc T31, on compare tout d'abord $DP_c$ et DP2. Si $DP_c$ est inférieur à DP2, on retourne au début du programme, de sorte que le décolmatage n'est pas initié. Si $DP_c$ est supérieur à DP2, on se dirige alors vers le bloc T32, où un pic de polluants est éventuellement détecté.

A cet égard, plusieurs approches peuvent être utilisées pour diagnostiquer un tel pic de polluants. De façon avantageuse, la détection de ce pic peut être réalisée par l'examen de l'historique du signal polluant et peut, par exemple, être reconnue par la conjonction de trois facteurs :

1. La valeur en aval du signal de concentration en polluant excède une première limite H1. En particulier, si le polluant est l'acide chlorhydrique, on choisira H1 dans la gamme 5 à 50 mg/Nm$^3$.

2. La valeur en aval de la concentration en polluant est croissante depuis deux unités de temps, le signal de polluants à l'instant t - 2 $\Delta$t est inférieur à la valeur à l'instant t, où $\Delta$t est l'intervalle de temps séparant deux acquisitions de signal polluants. On choisira avantageusement $\Delta$t compris entre 10 et 300 secondes.

3. La valeur en amont du signal polluant est supérieure à une limite pré-établie H2. Par exemple s'il s'agit de l'acide chlorhydrique mesuré sur une usine d'incinération d'ordures ménagères, cette valeur sera choisie dans la plage de 1000 à 3000 mg/Nm$^3$ de HCl.

Ainsi, si les trois conditions 1, 2 et 3 ci-dessus sont remplies, on arrive à la conclusion qu'il existe un pic de polluants. Dans ces conditions, le décolmatage n'est pas initié et on retourne au début du programme. En revanche, s'il n'y a pas de pic de polluants, sachant que $DP_c$ est supérieur à DP2 comme vu ci-dessus, on initie alors le décolmatage.

Ainsi, conformément à l'invention, ce décolmatage est mis en oeuvre si un au moins des tests T1 à T3 est vérifié. On notera également que le test d'arrêt TA peut être mené de façon indépendante de ces tests T1 à T3, à des endroits du logigramme différents de celui illustré.

## Revendications

1. Procédé de gestion du décolmatage d'un filtre à manche pour gaz ou fumées, dans lequel on acquiert au moins une mesure du signal de perte de charge (DP) au travers dudit filtre, et on calcule une mesure du signal corrigée par une valeur de débit, **caractérisé en ce que** :

   - on filtre le signal de perte de charge (DP) par des moyens numériques ou analogiques de manière à obtenir un signal filtré (DP*) pour s'affranchir des bruits de mesure,
   - on calcule une mesure du signal filtré (DP*), corrigée par une valeur du débit, selon la formule :

$$DP_c = DP^{\bullet} \times \left( \frac{Q_{ref}}{\overline{Q}} \right)^{n}$$

   où
   $\overline{Q}$ est la valeur moyenne du débit des fumées calculée sur une période de temps prédéterminée, comprise notamment entre 10 et 30 minutes, $Q_{ref}$ une valeur de débit de référence, et $\underline{n}$ un exposant choisi dans la plage de 1 à 2, et de préférence dans la plage de 1.2 à 1.5
   - on initie la séquence de décolmatage à la suite de l'occurrence d'au moins l'un quelconque des évènements suivants :

      Test 1 : DP > DP3
      ou bien
      Test 2 : Aucun décolmatage n'a été initié depuis r minutes ou bien
      Test 3 : ($DP_c$ > DP2) et (un pic de polluant n'est pas détecté).

   où :

DP3 est choisi dans la plage comprise entre 1500 et 2500 Pa

DP2 est choisi dans la plage comprise entre 1000 et 2000 Pa

$\tau$ est choisi dans la plage comprise entre 15 et 90 minutes.

2. Procédé selon la revendication 1, dans lequel on calcule le signal filtré (DP*) en utilisant un algorithme de Savisky-Golay selon la formule :

DP* = 0.126*DP(t-10 $\Delta$t) + 0.0140*DP(t-9 $\Delta$t) - 0.0629*DP(t-8 $\Delta$t) - 0.105*DP(t-7 $\Delta$t) - 0.112*DP(t-6 $\Delta$t) - 0.0839*DP(t-5 $\Delta$t) - 0.0210*DP(t-4 $\Delta$t) + 0.0769*DP(t-3 $\Delta$t) + 0.210*DP(t-2 $\Delta$t) + 0.378*DP(t- $\Delta$t) + 0.5800*DP(t), où $\Delta$t est l'intervalle de temps séparant deux acquisitions du signal de perte de charge, $\Delta$t étant compris entre 10 et 60 secondes.

3. Procédé selon la revendication 1 ou 2, dans lequel la condition selon laquelle un pic de polluant est détecté est remplie lors de la conjonction des trois évènements suivants :

i) La valeur du signal de mesure de la concentration amont est supérieure à un seuil haut amont prédéterminé.

ii) La valeur du signal de la mesure de la concentration aval est supérieure à un seuil haut aval prédéterminé.

iii) Le signal de mesure de la concentration aval relevé à l'instant (t-2 $\Delta$t') est inférieur au signal relevé à l'instant (t), ($\Delta$t') étant un intervalle de temps d'échantillonnage des signaux, choisi dans la plage de 10 à 30 secondes.

4. Procédé selon la revendication 3, dans lequel le seuil haut amont prédéterminé est compris entre 1000 et 3000 mg/Nm$^3$, alors que le seuil haut aval prédéterminé est compris entre 5 et 50 mg/Nm$^3$.

5. Procédé selon l'une quelconque des revendications précédentes, dans lequel on stoppe la séquence de décolmatage si DP < DP1, où DP1 est choisi dans la plage 700 - 1500 Pa.

**Claims**

1. Method of controlling the cleaning of a bag filter for gases or fumes, in which at least one measurement of the pressure drop signal (DP) across said filter is acquired and a signal measurement corrected by a flow rate value is calculated, **characterised in that**:

- the pressure drop signal (DP) is filtered by digital or analogue means so as to obtain a filtered signal (DP*) in order to eliminate measurement noise,

- a filtered signal (DP*) measurement corrected by a value of the flow rate is calculated according to the formula:

$$DP_c = DP^* \times \left(\frac{Q_{ref}}{\overline{Q}}\right)^n$$

where

$\overline{Q}$ is the average value of the flow rate of the fumes calculated over a predetermined period of time, especially from 10 to 30 minutes, $Q_{ref}$ is a reference flow rate value, and n is an exponent chosen within the range from 1 to 2 and preferably within the range from 1.2 tc 1.5,

- the cleaning sequence is initiated following the occurrence of at least any one of the following events:

Test 1 : DF > DP3
or
Test 2: no cleaning has been initiated for $\tau$ minutes or
Test 3: (DPc > DP2) and (a pollutant peak is not detected),

where:

DP3 is chosen within the range from 1500 to 2500 Pa,
DP2 is chosen within the range from 1000 to 2000 Pa,
$\tau$ is chosen within the range from 15 to 90 minutes.

2. Method according to claim 1, in which the filtered signal (DP*) is calculated using a Savisky-Golay algorithm according to the formula:

DP* = 0.126*$\supset$P(t-10 $\Delta$t) + 0.0140*DP(t-9 $\Delta$t) - 0.0629*DP(t-3 $\Delta$t) - 0.105*DP(t-7 $\Delta$t) - 0.112*DP(t-6 $\Delta$t) - 0.0839*DP(t-5 $\Delta$t) - 0.0210*DP(t-4 $\Delta$t) + 0.0769*DP(t-3 $\Delta$t) + 0.210*DP(t-2 $\Delta$t) + 0.378*DP(t-$\Delta$t) + 0.5800*DP(t), where $\Delta$t is the time interval separating two acquisitions of the pressure drop signal, $\Delta$t being from 10 to 60 seconds.

3. Method according to claim 1 or 2, in which the condition according to which a pollutant peak is detected is met when the following three events occur together:

i) the value of the upstream concentration measurement signal is greater than a predetermined upstream high threshold;

ii) the value of the downstream concentration measurement signal is greater than a predetermined downstream high threshold;
iii) the downstream concentration measurement signal determined at time (t-2 Δt') is smaller than the signal determined at time (t), (Δt') being a signal sampling time interval chosen within the range from 10 to 30 seconds.

4. Method according to claim 3, in which the predetermined upstream high threshold is from 1000 to 3000 mg/Nm$^3$ chile the predetermined downstream high threshold is from 5 to 50 mg/Nm$^3$.

5. Method according to any one of the preceding claims, in which the cleaning sequence is stopped if DP < DP1, where DP1 is chosen within the range from 700 to 1500 Pa.

**Patentansprüche**

1. Verfahren zur Lenkung der Reinigung eines Schlauchfilters für Gase oder Abgase, in dem mindestens eine Messung des Druckverlustsignals (DP) durch den Filter erfasst wird und eine durch einen Durchsatzwert korrigierte Messung des Signals berechnet wird, **dadurch gekennzeichnet, dass**:

   - das Druckverlustsignal (DP) zur Befreiung vom Messrauschen durch digitale oder analoge Mittel gefiltert wird, derart, dass ein gefiltertes Signal (DP*) erhalten wird,
   - gemäß der folgenden Formel eine durch einen Durchsatzwert korrigierte Messung des gefilterten Signals (DP*) berechnet wird:

$$DP_c = DP^* \, x \, \left\{ \frac{Q_{ref}}{\overline{Q}} \right\}^n$$

   wo
   $\overline{Q}$ der Mittelwert des Abgasdurchsatzes, der über einen vorbestimmten Zeitraum berechnet wird, der insbesondere zwischen 10 und 30 Minuten enthalten ist, $Q_{ref}$ ein Referenzdurchsatzwert, und $\underline{n}$ ein Exponent ist, der im Bereich von 1 bis 2 und vorzugsweise im Bereich von 1.2 bis 1.5 ausgewählt wird
   - der Reinigungsablauf nach dem Eintreten von mindestens irgendeinem der folgenden Ereignisse eingeleitet wird:

      Test 1: DP > DP3
      oder
      Test 2: es wurde seit τ Minuten keine Reinigung eingeleitet

   oder
   Test 3: (DPc > DP2) und (es wurde keine Schadstoffspitze ermittelt).

   wo:

      DP3 im Bereich ausgewählt wird, der zwischen 1500 und 2500 Pa enthalten ist
      DP2 im Bereich ausgewählt wird, der zwischen 1000 und 2000 Pa enthalten ist
      τ im Bereich ausgewählt wird, der zwischen 15 und 90 Minuten enthalten ist.

2. Verfahren nach Anspruch 1, wobei das gefilterte Signal (DP*) unter Verwendung eines Savitzky-Golay-Algorithmus gemäß der folgenden Formel berechnet wird:

      DP* = 0.126*DP(t-10 Δt) + 0.0140*DP(t-9 Δt) - 0.0629*DP(t-8 Δt) - 0.105*DP(t-7 Δt) - 0.112*DP(t-6 Δt) - 0.0839*DP(t-5 Δt)-0.0210*DP(t-4 Δt) + 0.0769*DP(t-3 Δt) + 0.210*DP(t-2 Δt) + 0.378*DP(t- Δt) + 0.5800*DP(t), wo Δt das Zeitintervall ist, das zwei Druckverlust-Signalerfassungen trennt, wobei Δt zwischen 10 und 60 Sekunden enthalten ist.

3. Verfahren nach Anspruch 1 oder 2, wobei die Bedingung, unter der eine Schadstoffspitze ermittelt wird, beim Zusammentreffen der folgenden drei Ereignisse erfüllt ist:

      i) Der Wert des Messsignals der Konzentration stromaufwärts ist höher als eine vorbestimmte obere Schwelle stromaufwärts.
      ii) Der Wert des Messsignals der Konzentration stromabwärts ist höher als eine vorbestimmte obere Schwelle stromabwärts.
      iii) Das zum Zeitpunkt (t-2 Δt') erfasste Messsignal der Konzentration stromabwärts ist niedriger als das zum Zeitpunkt (t) erfasste Signal, wobei (Δt') ein Signalabtastungszeitintervall ist, das im Bereich von 10 bis 30 Sekunden ausgewählt wird.

4. Verfahren nach Anspruch 3, wobei die vorbestimmte obere Schwelle stromaufwärts zwischen 1000 und 3000 mg/Nm$^3$ enthalten ist, während die vorbestimmte obere Schwelle stromabwärts zwischen 5 und 50 mg/Nm$^3$ enthalten ist.

5. Verfahren nach einem der vorhergehenden Ansprüche, wobei der Reinigungsablauf abgebrochen wird, wenn DP < DP1, wo DP1 in einem Bereich von 700 bis 1500 Pa ausgewählt wird.

Figure unique

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5484536 A